# EUROPEAN PATENT SPECIFICATION

(11) **EP 1 241 099 B1**
(45) Date of publication and mention of the grant of the patent: **18.02.2004**
(21) Application number: 01830162.2
(22) Date of filing: 12.03.2001
(51) Int. Cl.: B65B 51/22, B29C 65/08

(54) **Ultrasonic sealing device for sealing packages of pourable food products**
Ultraschallsiegelvorrichtung zum Versiegeln von Verpackungen mit fliessfähigen Nahrungsmitteln
Dispositif de soudage par ultrasons pour le scellement d'emballages de produits alimentaires fluides

(43) Date of publication of application: 18.09.2002
(73) Proprietor: Tetra Laval Holdings & Finance SA, 1009 Pully (CH)
(72) Inventor: Anderstedt, Jan, S-271 50 Ystad (SE); Capasso, Salvatore, 41100 Modena (IT); Knutsson, Kent, S-261 61 Landskona (SE); Canepari, Luca, 41100 Modena (IT); Fontanini, Alessandro, 40010 Calcara (IT)
(74) Representative: Franzolin, Luigi

(56) References cited:
- EP-A- 0 615 907

## Description

The present invention relates to an ultrasonic sealing device for sealing packages of pourable food products made from sheet packaging material.

In particular, the invention applies preferably, though not exclusively, to a unit for forming and sealing packages made from a continuously filled tube of sheet packaging material.

Many pourable food products, such as fruit juice, pasteurized or UHT (ultra-high-temperature processed) milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing a web of laminated packaging material. The laminated packaging material comprises layers of fibrous material, e.g. paper, covered on both sides with heat-seal plastic material, e.g. polyethylene; and, in the case of aseptic packages for long-storage products such as UHT milk, the side of the packaging material eventually contacting the food product in the package also has a layer of oxygen-barrier material, e.g. a sheet of aluminium or EVOH, which is in turn covered with a number of layers of heat-seal plastic material.

As is known, such packages are made on fully automatic packaging machines, on which a continuous tube is formed from the web-fed packaging material; the web of packaging material is sterilized on the packaging machine itself, e.g. by applying a chemical sterilizing agent, such as a hydrogen peroxide solution, which, after sterilization, is removed, e.g. vaporized by heating, from the surfaces of the packaging material; and the web of packaging material so sterilized is maintained in a closed sterile environment, and is folded and sealed longitudinally to form a vertical tube.

The tube is filled from the top with the sterilized or sterile-processed food product, and is gripped at equally spaced cross sections by means of two pairs of jaws. More specifically, the two pairs of jaws act cyclically and successively on the tube to seal the packaging material of the tube and form a continuous strip of pillow packs connected to one another by respective transverse sealing bands.

The pillow packs are separated by cutting the respective sealing bands, and are then fed to a final folding station where they are folded mechanically into the finished parallelepiped shape.

In the case of aseptic packages with a layer of aluminium as the barrier material, the cross sections of the tube are normally sealed by inducing loss current in the aluminium layer to melt the heat-seal plastic material locally.

More specifically, one of the jaws in each pair comprises a main body made of nonconducting material, and an inductor housed in a face seat in the main body; and the other jaw comprises pressure pads made of flexible material, e.g. rubber.

The inductor is powered when the relative pair of jaws is gripped about the tube, so as to seal a cross section of the tube by sealing the plastic cover material.

In the case of packages with no aluminium layer or other electrically conductive materials, the cross sections of the tube are normally sealed using a hot plate for locally heating the packaging material inwards.

More specifically, one of the jaws features the hot plate, while the other normally has one or more pressure pads of flexible material. This sealing method, commonly referred to as "hot-plate" sealing, calls for relatively prolonged contact between the hot plate and the packaging material.

To accelerate local melting of the packaging material, and so increase package output, increasing use is made of ultrasonic sealing, which is performed by means of a device for generating mechanical vibrations at ultrasonic frequency (hereinafter referred to simply as an "ultrasonic device") carried by one jaw, and an anvil carried by a counter-jaw and acting as a rigid supporting surface; the tube of packaging material is gripped between the ultrasonic device and the anvil so as to bring into contact and compress two facing walls of the material; and the ultrasonic vibrations heat the material to melt the thermoplastic material and so seal the walls of the tube.

More specifically, the ultrasonic device comprises an outer casing; one or more ultrasonic-vibration generators or sonotrodes housed in the casing and of the type described, for example, in EP-A-0 615 907; and a pair of right-angle walls or folding plates, which close the front of the casing and form a front opening through which the generators cooperate with the material. The folding plates provide for safeguarding the sonotrodes against dirt and molten thermoplastic material formed during the sealing operation, define the contact geometry of the jaw and material, and so assist in defining the geometry of the package.

Dirt and molten thermoplastic material, however, still tend to lodge inside the jaw through the front opening, so that periodic cleaning is inevitably required.

Known jaws of the above type have several drawbacks.

Firstly, cleaning the sonotrodes calls for removing the folding plates completely, which cannot be done in production environment, and therefore calls for fully dismantling the device in laboratory conditions and with the aid of skilled personnel.

Secondly, when producing packages featuring a preapplied opening device, e.g. a cap projecting from the material, one of the folding plates, to prevent interference with the opening device, must be shaped according to the specific type of package being produced, so that, in the event of production changes, the whole device must be removed and changed.

It is an object of the present invention to provide an ultrasonic sealing device designed to eliminate the aforementioned drawbacks typically associated with known devices.

According to the present invention, there is provided an ultrasonic sealing device as claimed in Claim 1.

A preferred, non-limiting embodiment of the present invention will be described by way of example with reference to the accompanying drawings, in which:
Figure 1 shows a schematic, partly sectioned elevation of a forming and sealing unit of a machine for packaging pourable food products;
Figure 2 shows a view in perspective of a sealing assembly forming part of the sealing unit and comprising a sealing device in accordance with the present invention;

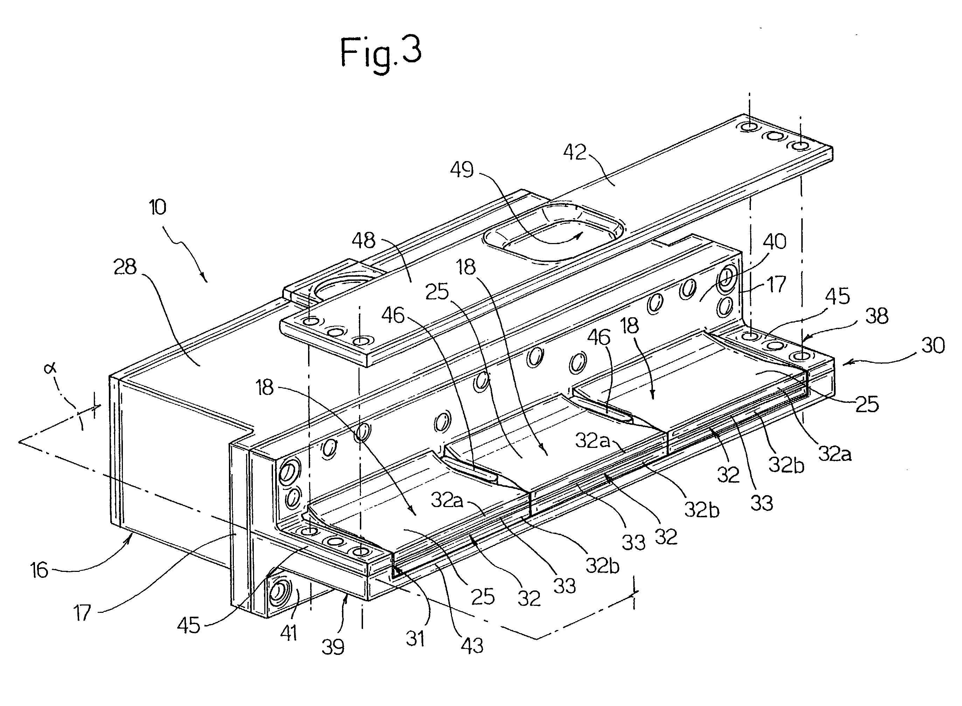

Figure 3 shows a larger-scale view in perspective of the Figure 2 sealing device;
Figure 4 shows an exploded view in perspective of the Figure 3 device.

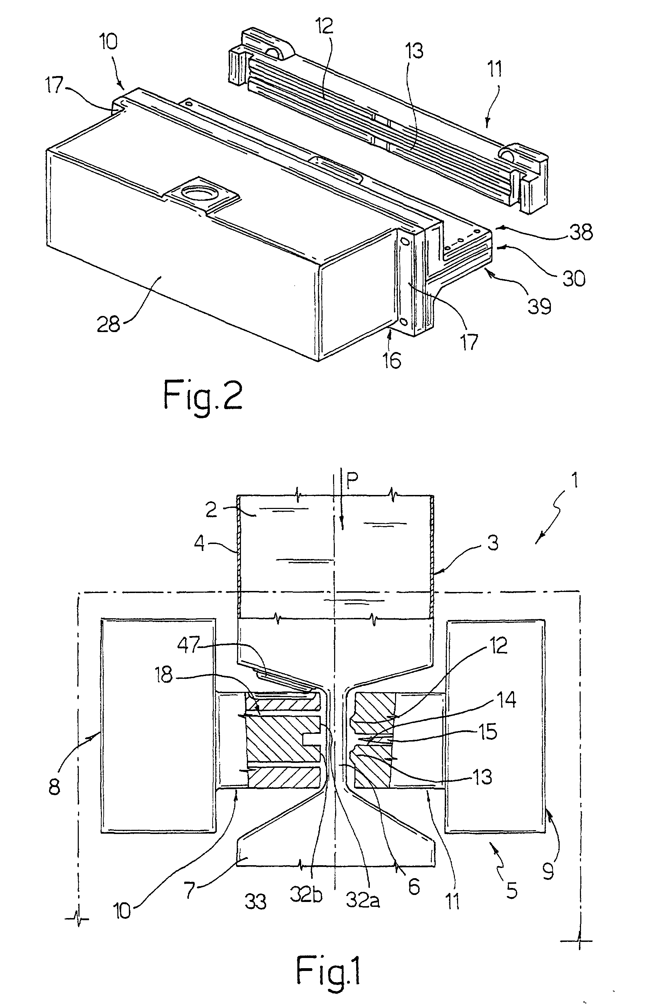

Number 1 in Figure 1 indicates as a whole a forming and transverse sealing unit of a packaging machine for producing sealed packages of a pourable food product 2, e.g. pasteurized or UHT milk, fruit juice, wine, etc., from a tube 3 of packaging material 4.

Tube 3 is formed in known manner upstream from unit 1 by longitudinally folding and sealing a web of heat-seal sheet material, is filled continuously from the top with the sterilized or sterile-processed food product 2 for packaging, and is fed axially downwards along a vertical path P through unit 1.

Unit 1 comprises two forming and sealing assemblies 5 (only one shown in Figure 1) which interact cyclically and successively with tube 3 of packaging material to grip the tube along equally spaced transverse sealing bands 6, make an ultrasonic seal along bands 6 to define a succession of pillow packs 7, and then cut the pillow packs 7 apart.

Each assembly 5 - described herein only as required for a clear understanding of the present invention - substantially comprises two jaws 8, 9 located on opposite sides of tube 3 and respectively comprising an ultrasonic sealing device 10 in accordance with the present invention, and an anvil 11 (Figure 2).

Anvil 11 is substantially defined by a bar fixed to jaw 9 and having, at the front, a horizontal top rib 12 and a horizontal bottom rib 13 parallel to each other. Anvil 11 also comprises a central horizontal gap 14 interposed between ribs 12 and 13 and defining a seat for a knife 15 housed in sliding manner and controlled by a known actuating device (not shown) to cut tube 3 along transverse sealing bands 6.

Device 10 comprises a casing 16 fixed to jaw 8 by two end flanges 17; and a number of, e.g. three, ultrasonic-vibration generators or sonotrodes 18 arranged side by side and housed in casing 16.

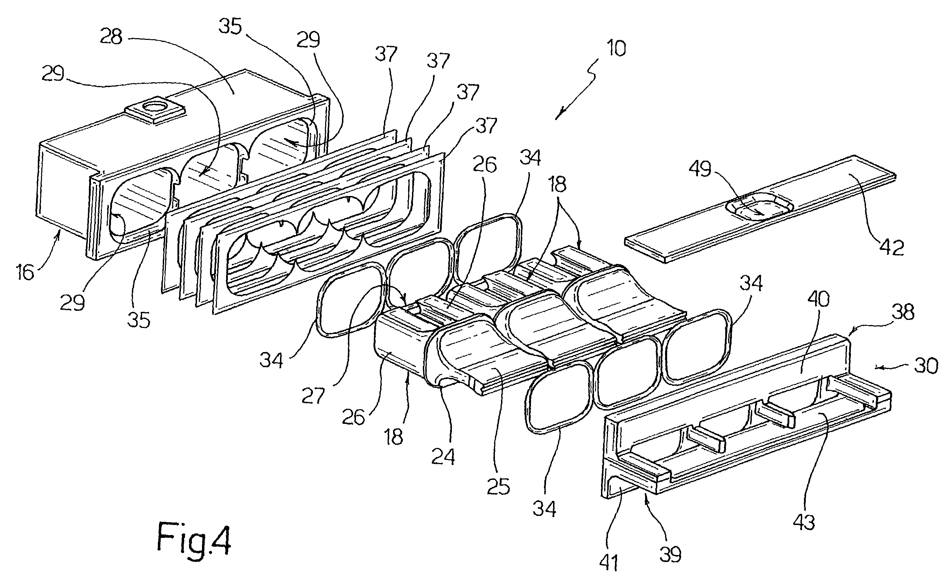

More specifically, the sonotrodes (Figure 4) are preferably of the type described in Patent EP-B-615907, and comprise an intermediate flange 24 defining a nodal plane, from which extend axially a tapered head 25 on one side, and, on the other side, two spaced reaction masses 26 with a piezoelectric exciter device 27 housed in between.

Casing 16 substantially comprises a box body 28 having a number of side by side cavities 29, each housing masses 26 and device 27 of a respective sonotrode 18; and a front forming portion 30, which interacts with tube 3 when forming the packages, and has a front opening 31 through which respective side by side, coplanar front sealing surfaces 32 of heads 25 face outwards.

Surfaces 32 are divided longitudinally into two bands 32a, 32b by a central slot 33 for receiving knife 15 when cutting sealing band 6 upon completion of the sealing operation.

Sonotrodes 18 are secured to casing 16 by respective intermediate flanges 24, which are housed in respective annular recesses 35 formed in body 28 and surrounding respective cavities 29, and are retained axially by forming portion 30, conveniently with the interposition of retaining rings 34 for absorbing any residual vibration of flanges 24. A varying number of calibrating shims 37 (Figure 4) may be interposed between forming portion 30 and body 28.

Portion 30 is defined by a top right-angle member 38 and a bottom right-angle member 39, which mate along a horizontal mid-plane of symmetry α of body 28, perpendicular in use to path P of tube 3 of packaging material.

More specifically, right-angle members 38, 39 comprise respective substantially flat flanges 40, 41 fixed to the front of casing 16 and for axially retaining sonotrodes 18 as described above; and respective folding plates 42, 43, which project frontwards from respective flanges 40, 41, extend parallel to plane α and crosswise to heads 25, and provide for protecting heads 25 and interacting with tube 3 to form the packages.

Bottom member 39 is in one piece, i.e. bottom folding plate 43 is integral with flange 41.

According to the present invention, top folding plate 42 is removable. More specifically, top folding plate 42 is substantially rectangular and flat, and rests on two lateral supports 45 and on two substantially beamlike intermediate supports 46 projecting frontwards from top flange 40 and located between heads 25 of sonotrodes 18.

If the packages being produced are fitted with a projecting opening device 47 (Figure 1), an outer face 48 of folding plate 42 conveniently comprises a recess 49 of corresponding shape and position and for receiving opening device 47 during the forming operation.

In actual use, jaws 8 and 9 of each forming assembly 5 are operated cyclically in known manner, each cycle comprising the steps of gripping tube 3 between device 10 and anvil 11; feeding jaws 8, 9 in the closed position along a portion of path P sufficient to perform the sealing operation along bands 32a, 32b of front portions 32 of heads 25, and the cutting operation; parting jaws 8, 9 to release tube 3; and feeding jaws 8, 9 back upwards, in the open position, for the next cycle.

Cleaning heads 25 of sonotrodes 18, e.g. to remove any dirt or traces of molten thermoplastic material formed during the sealing operations, can be done quickly and easily by simply removing folding plate 42, which may also be replaced with a different plate, e.g. having no recess 49 or having a differently shaped recess for receiving a different type of opening device.

Unlike known devices, plate 42 can be removed or replaced without dismantling the entire sealing device, and in particular without removing sonotrodes 18 from the casing. Moreover, it can be done in production environment, thus reducing maintenance and retooling time and cost when making production changes, as well as reducing output losses due to machine stoppages.

Clearly, changes may be made to device 10 according to the present invention without, however, departing from the scope of the accompanying Claims. In particular, only or also bottom folding plate 43 may be removable; and sonotrodes 18 may be of any other type, geometry or number.

## Claims

1. An ultrasonic sealing device (10) for sealing packages (7) of a pourable food product (2) made of sheet packaging material (4), and comprising:
an outer casing (16);
at least one ultrasonic-vibration generator (18) housed in said casing and having a head defined by a front sealing surface (32) cooperating with said packaging material (4);
said casing comprising a hollow body (28), and a front forming portion housing said head (25) of said generator (18) and having a front opening (31) through which said front sealing surface (32) of said generator (18) faces outwards; and
retaining means (35, 34, 24, 40, 41) for retaining said generator (18) inside said casing (16);
**characterized in that** said forming portion of said casing (16) comprises at least one removable plate (42) removable independently from said retaining means (35, 34, 24, 40, 41) of said generator (18) to allow access to said head (25) of said generator (18).

2. A device as claimed in Claim 1, **characterized in that** said retaining means (35, 34, 24, 40, 41) comprise an intermediate peripheral flange (24) of said generator (18) defining a nodal plane of the generator (18) and from which said head (25) extends axially; said flange (24) being interposed between said body (28) and said forming portion (30) of said casing (16).

3. A device as claimed in Claim 1 or 2, **characterized in that** said forming portion (30) comprises two right-angle members (38, 39) fixed to said body (28), housing said head (25) of said generator (18) in between, and forming said front opening (31) of said casing (16).

4. A device as claimed in Claim 3, **characterized in that** said right-angle members (38, 39) mate along a central plane (α) of said device (10) and comprise respective flanges (40, 41) fixed to said hollow body (28) and forming part of said retaining means (35, 34, 24, 40, 41) for retaining said generator (18); and respective folding plates (42, 43) extending from said flanges (40, 41) and parallel to said central plane.

5. A device as claimed in Claim 4, **characterized in that** at least one of said folding plates (42, 43) constitutes said removable plate (42) of said forming portion (30).

6. A device as claimed in Claim 5, **characterized in that** said removable folding plate (42) is fixed to a number of supporting members (45, 46) projecting integrally from said flange (40) of the respective said right-angle member (38).

7. A device as claimed in any one of the foregoing Claims, **characterized in that** said removable plate (42) has an outer surface (48) in which is formed a recess (49) for housing an opening device (47) preapplied to said packaging material (4).

8. A device as claimed in any one of the foregoing Claims, **characterized by** comprising a number of side by side generators (18) having the front sealing surfaces (32) of the respective heads (25) side by side and coplanar with one another; said removable plate (42) extending crosswise to said heads (25).

## Patentansprüche

1. Eine Ultraschallsiegelvorrichtung (10) für das Versiegeln von Verpackungen (7) für ein fließfähiges Nahrungsmittel (2) aus einer Verpackungsmaterialbahn (4), mit:
einem äußeren Gehäuse (16);
mindestens einem Ultraschall-Vibrationsgenerator (18), der in dem Gehäuse untergebracht ist und einen Kopf aufweist, der eine vordere Versiegelungsfläche (32) aufweist und der auf das Verpackungsmaterial (4) einwirkt;
wobei das Gehäuse einen Hohlkörper (28) und einen vorderen Umformungsabschnitt aufweist, der den Kopf (25) des Generators (18) aufnimmt und der eine vordere Öffnung (31) hat, durch die die vordere Versiegelungsfläche (32) des Generators (18) nach außen zeigt; und
Sicherungsmittel (35, 34, 24, 40, 41) um den Generator (18) innerhalb des Gehäuses (16) zu sichern;
**dadurch gekennzeichnet,**
**dass** der Umformungsabschnitt des Gehäuses (16) mindestens eine entfernbare Platte (42) aufweist, die unabhängig von den Sicherungsmitteln (35, 34, 24, 40, 42) des Generators (18) entfernt werden kann, um den Zugang zum Kopf (25) des Generators (18) zu erlauben.

2. Vorrichtung nach Anspruch 1,
**dadurch gekennzeichnet,**
**dass** die Sicherungsmittel (35, 34, 24, 40, 41) einen äußeren Zwischenflansch (24) des Generators (18) aufweisen, der eine Knotenebene des Generators (18) definiert und von welchem der Kopf (25) axial absteht; wobei sich der Flansch (24) zwischen dem Körper (28) und dem Umformungsabschnitt (30) des Gehäuses (16) befindet.

3. Vorrichtung nach Anspruch 1 oder 2,
**dadurch gekennzeichnet,**
**dass** der Umformungsabschnitt (30) zwei rechtwinklige Bauteile (38, 39) aufweist, die am Körper (28) befestigt sind und zwischen denen der Kopf (25) des Generators (18) aufgenommen ist und die die vordere Öffnung (31) des Gehäuses (16) bilden.

4. Vorrichtung nach Anspruch 3,
**dadurch gekennzeichnet,**
**dass** die rechtwinkligen Bauteile (38, 39) entlang einer Mittenebene (α) der Vorrichtung (10) ineinander greifen und entsprechende Flansche (40, 41) aufweisen, die am Hohlkörper (28) befestigt sind und Teile der Sicherungsmittel (35, 34, 24, 40, 41) darstellen, um den Generator (18) zu sichern; und entsprechende Faltplatten (42, 43) die von den Flanschen (40, 41) abstehen und parallel zur Mittenebene verlaufen.

5. Vorrichtung nach Anspruch 4,
**dadurch gekennzeichnet,**
**dass** mindestens eine der Faltplatten (42, 43) eine entfernbare Platte (42) des Umformungsabschnitts (30) bildet.

6. Vorrichtung nach Anspruch 5,
**dadurch gekennzeichnet,**
**dass** die entfernbare Faltplatte (42) an mehreren Halterungen (45, 46) befestigt ist, die vom Flansch (40) des entsprechenden rechtwinkligen Bauteils (38) integral hervorstehen.

7. Vorrichtung nach einem der vorhergehenden Ansprüche,
**dadurch gekennzeichnet,**
**dass** die entfernbare Platte (42) eine äußere Fläche (48) mit einer Aussparung (49) für eine an dem Verpackungsmaterial (4) vorher angebrachte Öffnungsvorrichtung (47) hat.

8. Vorrichtung nach einem der vorhergehenden Ansprüche,
**dadurch gekennzeichnet,**
**dass** sie mehrere nebeneinanderliegende Generatoren (18) aufweist, wobei die vorderen Versiegelungsflächen (32) der entsprechenden Köpfe (25) nebeneinander und koplanar zueinander liegen und wobei die entfernbare Platte (42) sich quer zu besagten Köpfen (25) erstreckt.

## Revendications

1. Dispositif de soudage par ultrasons (10) pour le scellement d'emballages (7) d'un produit alimentaire fluide (2) fabriqués en un matériau d'emballage en feuille (4), comprenant :
un boîtier extérieur (16) ;
au moins un générateur de vibration ultrasonore (18) logé dans le dit boîtier et ayant une tête définie par une surface de soudage avant (32) qui coopère avec le dit matériau d'emballage (4);
le dit boîtier comprenant un corps creux (28) et une partie de formage avant contenant la dite tête (25) du dit générateur (18) et ayant une ouverture avant (31) à travers laquelle la dite surface de soudage avant (32) du dit générateur (18) est tournée vers l'extérieur ; et
des moyens de retenue (35, 34, 24, 40, 41) pour retenir le dit générateur (18) à l'intérieur du dit boîtier (16) ;
**caractérisé en ce que** la dite partie de formage du dit boîtier (16) comprend au moins une plaque amovible (42) démontable indépendamment des dits moyens de retenue (35, 34, 24, 40, 41) du dit générateur (18), pour permettre d'accéder à la dite tête (25) du dit générateur (18).

2. Dispositif selon la revendication 1, **caractérisé en ce que** les dits moyens de retenue (35, 34, 24, 40, 41) comprennent une bride périphérique intermédiaire (24) du dit générateur (18) définissant un plan nodal du générateur (18) et à partir duquel la dite tête (25) s'étend axialement ; la dite bride (24) étant interposée entre le dit corps (28) et la dite partie de formage (30) du dit boîtier (16).

3. Dispositif selon la revendication 1 ou 2, **caractérisé en ce que** la dite partie de formage (30) comprend deux éléments à angle droit (38, 39) fixés au dit corps (28), logeant entre eux la dite tête (25)) du dit générateur (18) et définissant la dite ouverture avant (31) du dit boîtier (16).

4. Dispositif selon la revendication 3, **caractérisé en ce que** les dits éléments à angle droit (38, 39) se rejoignent le long d'un plan central (α) du dit dispositif (10) et comprennent des ailes respectives (40, 41) fixées au dit corps creux (28) et faisant partie des dits moyens de retenue (35, 34, 24, 40, 41) pour retenir le dit générateur (18) ; et les plaques de pliage respectives (42, 43) s'étendent à partir des dites ailes (40, 41) et sont parallèles au dit plan central.

5. Dispositif selon la revendication 4, **caractérisé en ce qu'**au moins une des dites plaques de pliage (42, 43) constitue la dite plaque démontable (42) de la dite partie de formage (30).

6. Dispositif selon la revendication 5, **caractérisé en ce que** la dite plaque de pliage démontable (42) est fixée à une pluralité d'éléments de support (45, 46) qui font saillie solidairement à partir de la dite aile (40) du dit élément à angle droit respectif (38).

7. Dispositif selon une quelconque des revendications précédentes, **caractérisé en ce que** la dite plaque démontable (42) présente une surface extérieure (48) dans laquelle est formé un évidement (49) pour recevoir un dispositif d'ouverture (47) préalablement appliqué au dit matériau d'emballage (4).

8. Dispositif selon une quelconque des revendications précédentes, **caractérisé en ce qu'**il comprend une pluralité de générateurs côte à côte (18) présentant les surfaces de soudage avant (32) des têtes respectives (25) côte à côte et mutuellement dans un même plan ; la dite plaque démontable (42) s'étendant transversalement aux dites têtes (25).
